# EUROPÄISCHE PATENTANMELDUNG

(11) **EP 1 041 482 A1**
(43) Veröffentlichungstag der Anmeldung: **04.10.2000**
(21) Anmeldenummer: 99106321.5
(22) Anmeldetag: 26.03.1999
(51) Int. Cl.: G06F 1/00

(54) **Manipulationssichere integrierte Schaltung**

(71) Anmelder: SIEMENS AKTIENGESELLSCHAFT, 80333 München (DE)
(72) Erfinder: Pockrandt, Wolfgang, 85293 Steinkirchen (DE)

(57) **Zusammenfassung**

Die Erfindung betrifft eine integrierte Schaltung, in welcher eine Schaltung mit zu schützender Information von einer Abschirmebene überdeckt wird, in welcher ein Netzwerk mit einer Vielzahl von Knoten ausgebildet ist. Ein Teil der Knoten ist mit Mitteln für einen Soll-Ist-Vergleich verknüpft. Mit diesen Mitteln wird jeder Knoten auf einen charakteristischen Ausgangsstrom hin überprüft. Abweichungen von dem charakteristischen Ausgangsstrom führen zu einer Änderung der in der Schaltung gespeicherten vor Manipulation oder Analyse zu schützenden Information.

## Beschreibung

Die Erfindung betrifft eine integrierte Schaltung und insbesondere eine integrierte Schaltung, welche einen sicheren Schutz gegen Analyse und Manipulation auch bei Benutzung moderner Analyse- und Manipulationsgeräte gewährleistet.

In jüngster Zeit hat der Schutz von integrierten Schaltungen gegen Analyse und Manipulation eine zunehmende Bedeutung erlangt. Es besteht ein großer Bedarf daran, die in einer integrierten Schaltung enthaltene Information davor zu schützen, von unberechtigten Dritten analysiert oder verändert zu werden. Der Begriff "Information" soll im Rahmen dieser Anmeldung in seinem breitesten Sinn verstanden werden und beispielsweise Daten, Softwareprogramme, Steuerleitungen und ähnliches umfassen.

Eine bisher übliche Methode, kritische Information gegen Analyse und Manipulation zu schützen, besteht darin, diese Information in einer möglichst tiefen Ebene der integrierten Schaltung zu führen. Auf diese Weise ist das Schaltungsbild zumindest gegen optische Analyse geschützt.

Weiterhin ist es üblich, die in der tiefen Ebene versteckte Information in einer darüberliegenden Ebene mit zur Schaltung gehörenden Leitungen zu verdecken. Es ist jedoch schwierig, dieses Verdecken ganzflächig und konsequent durchzuführen. Außerdem ist es durch moderne Geräte wie das FIB möglich geworden, die zur Verdeckung benutzten Leitungen zu entfernen und derart neu zu verknüpfen, daß sie die beabsichtigte Analyse oder Manipulation nicht mehr verhindern können. Ein besserer Schutz wird erreicht, wenn in einer oberen Ebene eine eigens und nur zur Abschirmung der kritischen Information verwendete verdrahtete Schicht vorhanden ist. Auf diese Weise kann die informationstragende Schicht konsequent verdeckt werden. Es bleibt jedoch das Problem, daß mit moderner Ausrüstung wie beispielsweise dem FIB diese verdrahtete Ebene manipuliert und damit ihre Schutzwirkung ganz oder teilweise aufgehoben werden kann.

**Aufgabe** der Erfindung ist es, eine integrierte Schaltung anzugeben, welche auch bei Verwendung moderner Analyseoder Manipulationswerkzeuge einen sicheren Schutz der in der integrierten Schaltung enthaltenen Information gewährleistet.

Die Lösung dieser Aufgabe gelingt mit der integrierten Schaltung gemäß Anspruch 1. Bevorzugte Ausführungsformen sind in den Unteransprüchen beschrieben.

Die Erfindung betrifft also eine integrierte Schaltung, welche eine erste Ebene aufweist, in der eine Schaltung mit zu schützender Information ausgebildet ist. Diese erste Ebene wird im folgenden auch als Informationsebene bezeichnet. Die integrierte Schaltung kann beispielsweise in einem Halbleiterchip ausgebildet sein. Der Begriff "Ebene" ist dabei nicht in der Weise zu verstehen, daß es sich um eine absolut plane Fläche handeln muß.

Die integrierte Schaltung umfaßt weiterhin wenigstens eine zweite Ebene, welche die erste Ebene zu einer Seite hin überdeckt, von welcher die Informationsebene vom Äußeren der integrierten Schaltung her erreichbar ist. In der zweiten Ebene, die nachfolgend auch als Netzwerkebene bezeichnet wird, ist ein Netzwerk mit einer Vielzahl von Knoten ausgebildet. Dieses Netzwerk ist mit wenigstens einer Stromquelle verbunden.

Erfindungsgemäß ist wenigstens ein Teil der Knoten in der Netzwerkebene mit Mitteln für einen Soll-Ist-Vergleich der von den jeweiligen Knoten übermittelten Ströme verbunden. Das Netzwerk ist zudem so ausgebildet, daß bei Einspeisung eines Eingangsstroms von der wenigstens einen Stromquelle in das Netzwerk an jedem der mit Soll-Ist-Vergleichsmitteln verknüpften Knoten ein charakteristischer Ausgangsstrom erzeugt wird und dort abgreifbar ist. Die Mittel für den Soll-Ist-Vergleich sind so ausgebildet, daß eine Änderung der in der Schaltung der ersten Ebene gespeicherten Information bewirkt wird, wenn von dem Vergleichsmittel eine Abweichung von dem charakteristischen Ausgangsstrom des jeweiligen Knotens festgestellt wird.

In der erfindungsgemäßen integrierten Schaltung wird also - wie dies bereits aus dem Stand der Technik bekannt warebenfalls eine separate Abschirmungsebene verwendet, die über der die zu schützende Information führenden Ebene liegt. Im Unterschied zum Stand der Technik ist jedoch in dieser Abschirmebene ein Netzwerk ausgebildet, dessen Knoten zumindest teilweise über die Soll-Ist-Vergleichsmittel mit der Schaltung der darunterliegenden Informationsebene verknüpft sind. In das Netzwerk wird von wenigstens einer Stromquelle ein Eingangsstrom eingespeist, der über das Netzwerk weitergegeben wird und an den einzelnen Knoten zu einem Ausgangsstrom führt, der für jeden Knoten charakteristisch ist. An den Knoten, die mit den Soll-Ist-Vergleichsmitteln verbunden sind, werden diese charakteristischen Ausgangsströme abgegriffen und mit den Mitteln für einen Soll-Ist-Vergleich daraufhin überprüft, ob der jeweils abgegriffene charakteristische Ausgangsstrom mit dem für den jeweiligen Knoten zu erwartenden Ausgangsstrom übereinstimmt. Ist dies nicht der Fall, wird eine Änderung der in der Schaltung der ersten Ebene gespeicherten Information bewirkt.

Eine Abweichung des Sollwerts vom Istwert wird dann festgestellt werden, wenn zum Zwecke der Manipulation oder Analyse von außen in das Netzwerk eingegriffen wird. Durch die erfindungsgemäße Ausgestaltung der Netzwerkebene und die Verknüpfung miteinander führt ein solcher äußerer Eingriff in jedem Fall zu einer Veränderung der Werte an mehreren Knoten. Diese komplexen Veränderungen müßten beim Versuch der Analyse der Schaltung berücksichtigt und korrigiert werden. Wegen der Vielzahl der bewirkten Änderungen ist dies in der Praxis jedoch nicht möglich. Die erfindungsgemäße integrierte Schaltung ist deshalb hervorragend vor Analyse und Manipulation geschützt.

Bevorzugt ist das Netzwerk der erfindungsgemäßen integrierten Schaltung so aufgebaut, daß zwischen den Knoten eine Vielzahl von Widerständen und/oder Kapazitäten und/oder Induktivitäten angeordnet sind. Auf diese Weise wird erreicht, daß der von der wenigstens einen Stromquelle erzeugte Eingangssstrom abhängig davon, auf welchem Weg er durch das Netzwerk weitergeleitet und welche Widerstände, Kapazitäten oder Induktivitäten es passiert hat, an jedem Knoten ein unterschiedlicher und für den Knoten charakteristischer Ausgangsstrom erhalten wird.

In einer in einem Halbleiterchip ausgebildeten integrierten Schaltung kann das Netzwerk vorzugsweise durch Dotierung einer Schicht von Halbleitermaterial erzeugt werden. Zweckmäßig wird dabei eine Polysiliciumschicht verwendet. Der Widerstandswert kann dabei beispielsweise durch die Art und/oder Konzentration der implantierten Materialien gesteuert werden.

Besonders bevorzugt ist es, wenn die Dotierung als n in n-oder p in p-Dotierung erfolgt. Die erzeugten Strukturen des Netzwerkes unterscheiden sich dann ausschließlich in der Konzentration der Dotierung von der sie umgebenden Fläche. Damit wird eine Detektion des Netzwerkes äußerst schwierig. Eine optische Analyse des Netzwerkes ist praktisch ausgeschlossen, das Erkennen von Ansatzpunkten für eine potentielle Manipulation sehr stark erschwert.

Um die Analyse und Manipulation der zu schützenden Information weiter zu erschweren, umfaßt in einer bevorzugten Ausführungsform der Erfindung die Stromquelle einen Signalgenerator, der das Einspeisen veränderlicher Eingangssignale in das Netzwerk ermöglicht. Die Veränderung des Eingangssignals kann beispielsweise darin bestehen, daß die Stromstärke im Laufe der Zeit verändert wird.

Besonders bevorzugt ist es, die wenigstens eine Stromquelle mit wenigstens einem Teil der Knoten zu verbinden. In diesem Fall kann die Veränderung der Eingangssignale auch dadurch erreicht werden, den Strom abwechselnd an verschiedenen Knoten einzuspeisen. Auch hier kann hier zusätzlich der eingespeiste Strom selbst mit der Zeit verändert werden.

In einer besonders bevorzugten Ausführungsform ist in der erfindungsgemäßen integrierten Schaltung wenigstens ein Rechenmittel vorhanden, mit welchem für jeden zu einer bestimmten Zeit in das Netzwerk eingespeisten Eingangsstrom für jeden Knoten, an welchem ein Soll-Ist-Vergleich durchgeführt wird, das jeweils zu erwartende Ausgangssignal berechnet wird. Dieses wenigstens eine Rechenmittel ist einerseits mit der Stromquelle verbunden, damit die Werte der jeweiligen Eingangssignale als Grundlage der Berechnung übermittelt werden können, und andererseits mit den Mitteln für den Soll-Ist-Vergleich, an welche die berechneten Sollwerte abgegeben werden.

Als bevorzugtes Mittel für den Soll-Ist-Vergleich wird erfindungsgemäß ein Operationsverstärker verwendet.

Wird von dem Mittel für den Soll-Ist-Vergleich festgestellt, daß für den zu überprüfenden Knoten der Istwert mit dem Sollwert nicht übereinstimmt, führt dies in der erfindungsgemäßen integrierten Schaltung dazu, daß die in der Schaltung der ersten Ebene gespeicherte Information verändert wird. Besonders bevorzugt besteht die Änderung in einem Reset der Schaltung. Es können also beispielsweise alle seit Inbetriebnahme der Schaltung gespeicherten Informationen gelöscht werden. Eine Untersuchung oder Manipulation dieser Information ist damit ausgeschlossen.

Die Funktionsweise der erfindungsgemäßen integrierten Schaltung soll nachfolgend anhand einer Zeichnung näher erläutert werden.

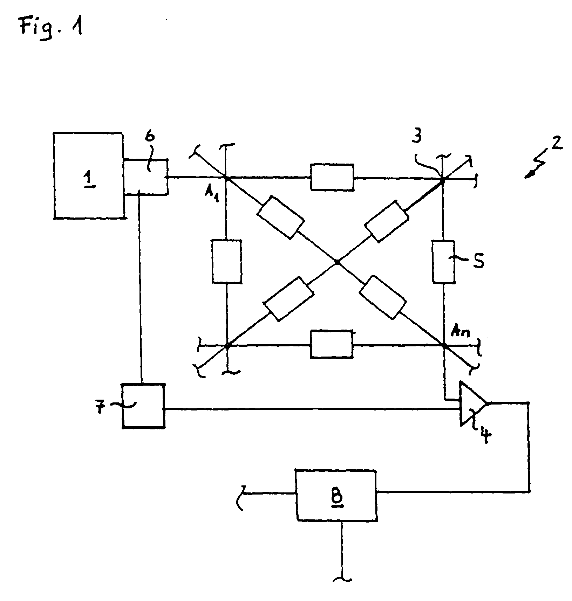

Die Figur zeigt schematisch einen Ausschnitt eines Netzwerkes 2, welches die zweite Ebene oder Netzwerkebene einer erfindungsgemäßen integrierten Schaltung bildet. Diese Netzwerkebene überdeckt eine erste Ebene, in welcher eine Schaltung mit zu schützender Information ausgebildet ist.

Das Netzwerk 2 weist eine Vielzahl von Knoten 3 auf, welche untereinander auf vielfältige Weise verknüpft sind. Zwischen den einzelnen Knoten 3 sind jeweils Widerstände 5 angeordnet, welche hier unterschiedliche Widerstandswerte aufweisen.

An einem der Knoten, der hier mit A1 bezeichnet ist, ist eine Stromquelle 1 angeschlossen, welche einen Signalgenerator 6 umfaßt. Durch diese Anordnung werden veränderliche Eingangssignale in das Netzwerk am Knoten A1 eingespeist. Abhängig von dem sich im Laufe der Zeit verändernden Eingangsstrom werden an den verschiedenen Knoten des Netzwerkes 2 zu jeder Zeit für den jeweiligen Knoten charakteristische Ausgangsströme erhalten. Für jeden der Knoten setzt sich der charakteristische Ausgangsstrom aus den Summen der Einzelströme zusammen, die auf verschiedenen Wegen das Netzwerk mit den unterschiedlichen Widerständen bis hin zum jeweiligen Knoten passiert haben.

An einigen der Knoten 3 des Netzwerkes 2 wird ein Soll-Ist-Vergleich des zu erwartenden Ausgangsstroms am Knoten mit dem tatsächlichen Ausgangsstrom durchgeführt. In der Figur ist ein solcher Knoten mit An bezeichnet. Dieser Knoten ist mit einem Operationsverstärker 4 als Mittel für den Soll-Ist-Vergleich verbunden. Den Sollwert erhält der Operationsverstärker 4 von einem Rechenmittel 7, welches wiederum auf der Grundlage der von der Stromquelle übermittelten Werte der Eingangssignale bzw. des zu einer bestimmten Zeit dem Netzwerk zugeführten Eingangsstrom das am Knoten An zu erwartende Ausgangssignal bzw. den zu erwartenden Ausgangsstrom berechnet. Der Soll-Ist-Vergleich mittels des Operationsverstärkers 4 erfolgt zweckmäßig kontinuierlich in bestimmten Zeitintervallen.

Wird durch Eingriff von außen am Netzwerk 2 manipuliert, führt aufgrund der komplexen Vernetzung der einzelnen Knoten auch ein lokal begrenzter Eingriff zu einer großflächigen Veränderung. Es werden also Veränderungen der Werte an mehreren Knoten festgestellt werden. Stimmt beispielsweise das am Knoten An vom Operationsverstärker 4 abgegriffene Ausgangssignal nicht mit dem berechneten Ausgangssignal überein, führt dies im gezeigten Fall dazu, daß ein Speicher 8 in der Schaltung der ersten Ebene gelöscht wird. Gleiche oder ähnliche Änderungen können in anderen Bereichen der zu schützenden Schaltung bewirkt werden.

Insgesamt führt also die Veränderung an mehreren Knoten im Netzwerk bei der erfindungsgemäßen integrierten Schaltung zu vielfältigen Änderungen der in der Schaltung in der ersten Ebene gespeicherten Information. Selbst bei geringfügigen Eingriffen in die erfindungsgemäße integrierte Schaltung sind deshalb Rückschlüsse auf das ursprüngliche Schaltungsbild und die darin enthaltene Information praktisch nicht mehr möglich.

## Patentansprüche

1. Integrierte Schaltung mit einer ersten Ebene, in welcher eine Schaltung mit zu schützender Information ausgebildet ist, sowie wenigstens einer zweiten Ebene, welche die erste Ebene zu einer Seite hin überdeckt, von welcher die erste Ebene vom Äußeren der integrierten Schaltung her erreichbar ist, und in welcher ein mit wenigstens einer Stromquelle (1) verbundenes Netzwerk (2) mit einer Vielzahl von Knoten (3) ausgebildet ist,
**dadurch gekennzeichnet,**
daß wenigstens ein Teil der Knoten mit Mitteln (4) für einen Soll-Ist-Vergleich der von den jeweiligen Knoten übermittelten Ströme verknüpft ist,
daß das Netzwerk (2) so ausgebildet ist, daß bei Einspeisung eines Eingangsstroms von der wenigstens einen Stromquelle (1) in das Netzwerk an jedem der mit den Mitteln (4) für einen Soll-Ist-Vergleich verknüpften Knoten ein charakteristischer Ausgangsstrom abgreifbar ist,
und daß die Mittel (4) für den Soll-Ist-Vergleich so ausgebildet sind, daß bei einer Abweichung von dem charakteristischen Ausgangsstrom des jeweiligen Knotens eine Änderung der in der Schaltung der ersten Ebene gespeicherten Information bewirkt wird.

2. Integrierte Schaltung gemäß Anspruch 1,
**dadurch gekennzeichnet,**
daß im Netzwerk (2) zwischen den Knoten (3) eine Vielzahl von Widerständen (5) und/oder Kapazitäten und/oder Induktivitäten angeordnet sind.

3. Integrierte Schaltung gemäß Anspruch 2,
**dadurch gekennzeichnet,**
daß das Netzwerk durch Dotierung einer Polysiliciumschicht erzeugt ist.

4. Integrierte Schaltung gemäß Anspruch 3,
**dadurch gekennzeichnet,**
daß das Netzwerk als n in n- oder p in p-Dotierung ausgebildet ist.

5. Integrierte Schaltung gemäß einem der Ansprüche 1 bis 4,
**dadurch gekennzeichnet,**
daß als Mittel (4) für den Soll-Ist-Vergleich ein Operationsverstärker vorhanden ist.

6. Integrierte Schaltung gemäß einem der Ansprüche 1 bis 5,
**dadurch gekennzeichnet,**
daß die wenigstens eine Stromquelle (1) einen Signalgenerator (6) zum Einspeisen veränderlicher Eingangssignale in das Netzwerk umfaßt.

7. Integrierte Schaltung gemäß einem der Ansprüche 1 bis 6,
**dadurch gekennzeichnet,**
daß die wenigstens eine Stromquelle zur Einspeisung des Stroms mit wenigstens einem Teil der Knoten (3) verbunden ist.

8. Integrierte Schaltung gemäß Anspruch 6 oder 7,
**dadurch gekennzeichnet,**
daß die wenigstens eine Stromquelle (1) zur Übermittlung der Werte der Eingangssignale mit wenigstens einem Rechenmittel (7) zur Berechnung des zu erwartenden Ausgangssignals des jeweiligen Knotens verbunden ist und das wenigstens eine Rechenmittel mit den Mitteln (4) für den Soll-Ist-Vergleich verbunden ist.

9. Integrierte Schaltung gemäß einem der Ansprüche 1 bis 8,
**dadurch gekennzeichnet,**
daß das Mittel (4) für den Soll-Ist-Vergleich so ausgebildet ist, daß bei Feststellung einer Abweichung vom Sollwert ein Reset der Schaltung bewirkt wird.
